# EUROPÄISCHE PATENTSCHRIFT

(11) **EP 1 265 947 B1**
(45) Veröffentlichungstag und Bekanntmachung des Hinweises auf die Patenterteilung: **19.07.2006**
(21) Anmeldenummer: 01925401.0
(22) Anmeldetag: 08.03.2001
(51) Int. Cl.: C08G 73/06

(54) **SCHNELL HÄRTBARE MISCHUNGEN UND KITS AUS POLYFUNKTIONELLEN CYANATEN UND AMINEN, DARAUS HERSTELLBARE DUROMERE UND HERSTELLUNGSVERFAHREN HIERFÜR**
QUICK-SETTING MIXTURES AND KITS WITH POLYFUNCTIONAL CYANATES AND AMINES, THE THERMOSETS PRODUCED THEREFROM AND METHODS FOR THE PRODUCTION THEREOF
MELANGES ET SYSTEMES A DURCISSEMENT RAPIDE CONSTITUES DE CYANATES ET D'AMINES POLYFONCTIONNELS, MATERIAUX THERMODURCISSABLES AINSI OBTENUS ET PROCEDE DE PRODUCTION CORRESPONDANT

(30) Priorität: 14.03.2000 DE 10012359
(43) Veröffentlichungstag der Anmeldung: 18.12.2002
(73) Patentinhaber: Fraunhofer-Gesellschaft zur Förderung der angewandten Forschung e.V., 80686 München (DE)
(72) Erfinder: BAUER, Jörg, 13156 Berlin (DE); BAUER, Monika, 12435 Berlin (DE); UHLIG, Christoph, 12487 Berlin (DE)
(74) Vertreter: Olgemöller, Luitgard Maria
(86) Internationale Anmeldenummer: PCT/EP2001/002622
(87) Internationale Veröffentlichungsnummer: WO 2001/068741

(56) Entgegenhaltungen:
- EP-A- 0 369 527
- DE-A- 19 528 882
- GB-A- 1 055 524
- US-A- 3 108 029
- US-A- 4 506 053
- US-A- 5 855 821

## Beschreibung

Die Erfindung betrifft schnellhärtende Polymere aus Polycyanaten und Polycyanat/Epoxid-Kombinationen mit aminischen Härtern. Diese Polymere sind vielseitig einsetzbar, insbesondere als Laminierharze, Klebstoffe, Gießharze, Underfiller, Verkappungsmassen, Beschichtungsmittel. Sie besitzen eine hohe Thermostabilität, sind flammwidrig, und ihre Verarbeitungszeit und -temperatur ist in weiten Bereichen einstellbar.

Duromere aus Polycyanaten (polyfunktionelle Cyansäureester der allgemeinen Formel R(OCN)ₙ) finden zunehmend breite Anwendung insbesondere als Laminierharze und Klebstoffe im Hi-Tech-Bereich (einen Überblick findet man z.B. in *"Chemistry and Technology of Cyanate Ester Resins*", I. Hamerton (ed.), Chapman & Hall, Glasgow, 1994). Sie zeichnen sich insbesondere durch hohe Glastemperaturen, hohe Zersetzungstemperaturen, Schwerentflammbarkeit bereits ohne Zusatz flammwidriger Zusatzstoffe, hohe Zähigkeit im Vergleich zu anderen Hoch-Tg-Duromeren, geringe dielektrische Verluste, gute Adhäsion zu verschiedenen Substratmaterialien, hohe Chemikalienbeständigkeit und ein geringes Korrosionspotential aus.

Die Härtungsreaktion der Polycyanate (Polycyclotrimerisierung zu Polycyanuraten) verläuft für sehr reine Monomere relativ langsam. Verunreinigungen aus der Monomersynthese, z.B. restliche Phenole oder Wasser, katalysieren die Härtungsreaktion, jedoch auf undefinierte und unkontrollierbare Weise. Aus diesem Grund werden sehr saubere Monomere eingesetzt, von denen einige kommerziell verfügbar sind, wie z. B. AroCy B-10 auf Basis von Bisphenol A von der Firma Lonza AG, Schweiz. Zur Beschleunigung der Härtungsreaktion und damit zur Erzielung effektiver Verarbeitungsmethoden von Polycyanaten werden verschiedene Katalysatoren eingesetzt. Hierbei haben sich insbesondere Metall-acetylacetonate, Zinksalze, verschiedene metallorganische Verbindungen sowie Phenole und Verbindungen mit NH-Gruppen bewährt.

Wie bereits seit den sechziger Jahren bekannt ist, reagieren primäre und sekundäre Amine glatt mit Cyanaten (siehe z. B. Grigat, E. et al., Angew. Chem. 79, 219 (1967)). Es wurde deshalb auch versucht, Amine als Katalysator der Cyclotrimerisation der Cyanate einzusetzen. Dabei zeigte sich jedoch, daß insbesondere bei Verwendung aliphatischer Amine, z.B. der üblichen Epoxidharzhärter, die Reaktivität der Mischung zu hoch ist und das Processing nicht beherrscht wird. So geliert z. B. das bei Raumtemperatur flüssige Dicyanat AroCy® L-10 (Lonza AG) bereits beim Einmischen geringer Mengen Diaminohexan schlagartig. Demgegenüber gelang durch Einsatz fester Aminpulver in Kombination mit anderen festen Katalysatoren (0.1-1.5 wt.-%) die Formulierung eines Cyanat/Epoxy-Systems für einen Einsatz als Underfiller (US 5,855,821), wobei das Amin erst bei erhöhter Härtungstemperatur seine katalytische Wirksamkeit entfaltet.

Werden molare Anteile eines Amins größer 10 mol% bezogen auf die Cyanatgruppen eingesetzt, kann nicht mehr von einer rein katalytischen Wirkung ausgegangen werden. Es tritt vielmehr eine Coreaktion zwischen Cyanat und Amin ein, wodurch der Anteil der aus den Cyanaten allein gebildeten Cyanuratstrukturen im Reaktionsprodukt drastisch sinkt. Diese Reaktion wurde bereits bei der Herstellung von härtbaren Polyaddukten angewendet (z. B. DE 1 220 132). Dabei wurden Lösungen von Amin und Cyanat gemischt, das entstandene Polyaddukt als Substanz abgetrennt und diese Masse bei erhöhter Temperatur gehärtet. Bei Verwendung bifunktioneller Ausgangsstoffe erhielt man dabei lineare, über Isoharnstoffethergruppen verknüpfte Produkte. Bei Verwendung oder Mitverwendung von tri- und mehrfunktionellen Aminen und/oder tri- und mehrfunktionellen Cyanaten sollten entsprechende vernetzte Kunststoffe entstehen.

Vorgebildete Cyanat-Amin-Polyaddukte eignen sich auch zur Herstellung thermostabiler Duromere, wenn sie mit anderen Reaktivharzen, z.B. Maleimiden (US 4,499,245, US 4,370,467), Cyclopentadienen (US 4,469,859), Polyhydantoinen (US 4,410,666), Polyisocyanaten (US 4,369,302), Epoxies (US 4,393,195, EP 0,369,527) und anderen gemischt werden.

Da die Anwesenheit einer größeren Menge von Amin in einer Cyanat-Amin-Mischung zwangsläufig zu einer unkontrollierten Bildung von offenkettigen oder vernetzen Polycyanaten führen sollte, scheint die Copolymerisation einer größeren Menge eines Amins mit einem polyfunktionellen Cyanat mit dem Ziel der Herstellung von modifizierten Polycyanuraten nicht möglich zu sein.

Aufgabe der vorliegenden Erfindung ist die Bereitstellung von Harzsystemen aus polyfunktionellen Cyanaten oder Cyanat-Epoxid-Gemischen und Aminen, die sich zu duromeren Polycyanat-Copolymeren mit einem hohen Anteil an Triazinstrukturen umsetzen lassen, sowie die Bereitstellung der so erhältlichen Duromere. Aufgabe der Erfindung ist weiterhin die Bereitstellung von Harzsystemen, aus denen die genannten Polycyanat-Duromere mit schnellen Härtungszeiten und hoher Reproduzierbarkeit erhalten werden können.

Es wurde nun gefunden, daß Kombinationen aus Cyanaten bzw. Cyanat-Epoxid-Gemischen und Aminen formuliert werden können, die eine kontrollierbare Härtung ohne vorherige Prepolymerisation ermöglichen. Dabei können molare Anteile der Aminogruppen von etwa 5 bis etwa 50 mol-%, bezogen auf die Summe der Amino- und Cyanatgruppen in der Mischung, eingesetzt werden, wodurch Gelier- und Härtungszeiten in weiten Grenzen variierbar sind. Dies wird erreicht, indem reaktivitätsblockierte oder -geminderte, insbesondere chemisch oder physikalisch verkapselte primäre oder sekundäre Amine den Cyanaten bzw. Cyanat-Epoxid-Gemischen zugesetzt werden. Nach Freisetzung des Amins, z.B. durch Schmelzen bei erhöhten Temperaturen, Entfernen von Verkapselungen, Anwendung von Druck, Ultraschallwellen oder anderen Energieformen, startet der Härtungsprozeß der Harze. Die Härtungszeiten können je nach Zusammensetzung des Harzes, Reaktivität des Amins und Härtungstemperatur zwischen wenigen Sekunden bis mehreren Stunden liegen. Die Glastemperaturen der gehärteten Duromere variieren je nach Struktur des eingesetzten Grundharzes Cyanat/Epoxid und liegen häufig zwischen 120°C und 350°C. Hohe Glastemperaturen werden insbesondere bei Einsatz von Novolakcyanaten bzw. Novolakepoxiden erhalten. Sehr kurze Härtungszeiten werden bei Verwendung primärer Alkylamine erzielt.

Als Cyanate können erfindungsgemäß polyfunktionelle Cyanate eingesetzt werden, und zwar vorzugsweise solche der nachfolgend aufgeführten Strukturen I-IV: 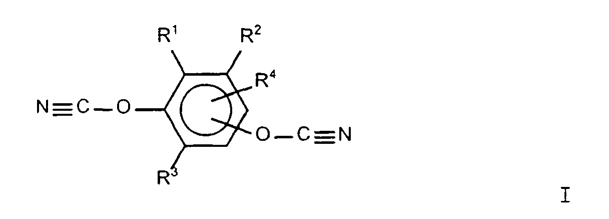 worin R¹ bis R⁴ unabhängig voneinander Wasserstoff, C₁-C₁₀-Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können. Beispiele sind Phenylen-1,3-dicyanat, Phenylen-1,4-dicyanat, 2,4,5-Trifluorophenylen-1,3-dicyanat; 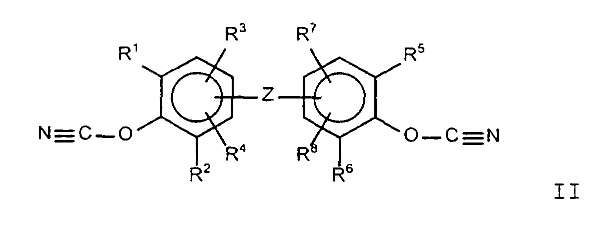 worin R⁵ bis R⁸ wie R¹ bis R⁴ sind und Z eine chemische Bindung, SO₂, CF₂, CH₂, CHF, CH(CH₃), Isopropyl, Hexafluoroisopropyl, C₁₋C₁₀-Alkyl, O, NR⁹, N=N, CH=CH, COO, CH=N, CH=N-N=CH, Alkyloxyalkyl mit C₁-C₈-Alkyl, S, Si(CH₃)₂ oder 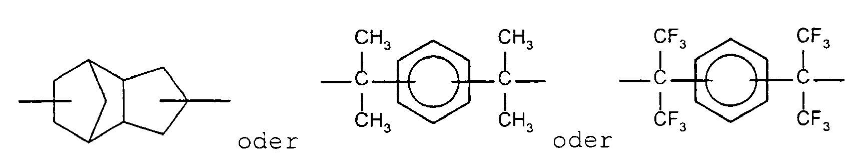 ist.

Beispiele sind 2,2-Bis(4-cyanato-phenyl)propan, 2,2-Bis(4-cyanato-phenyl)hexafluoropropan, Biphenylen-4,4'-dicyanat; 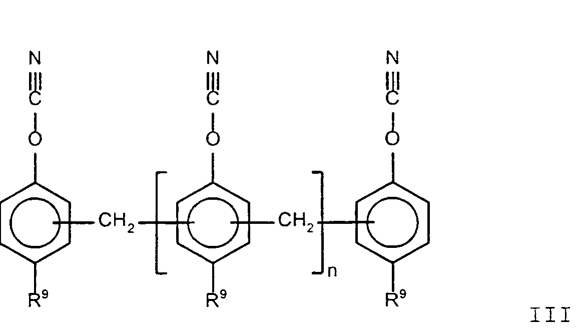 worin R⁹ Wasserstoff oder C₁-C₁₀-Alkyl ist und n eine ganze Zahl von 0 bis 20 bedeutet, sowie

N≡C―O―R¹⁰-O―C≡N IV

wobei R¹⁰ ein zweibindiger organischer nichtaromatischer Kohlenwasserstoff mit mindestens einem Fluor-Atom und insbesondere mit 3 bis 12 Kohlenstoffatomen ist. Die genannten Cyanate können als Monomere oder als Prepolymere, allein oder in Mischungen untereinander oder im Gemisch mit weiteren monofunktionellen oder polyfunktionellen Cyanaten eingesetzt werden.

Die Eigenschaften der hieraus erhältlichen Polycyanuratharze, insbesondere die Glastemperatur, können z.B. dadurch beeinflußt werden, daß die polyfunktionellen Cyanate und/oder deren Prepolymere mit Monocyanaten der Strukturen V und VI, worin R¹ bis R⁵ und R¹⁰ wie vorstehend definiert ist, copolymerisiert werden, wobei der Anteil der Cyanatgruppen der monofunktionellen Cyanate bis zu 50 mol%, bezogen auf alle Cyanatgruppen der Mischung, beträgt.

N≡C-O-R¹⁰ V

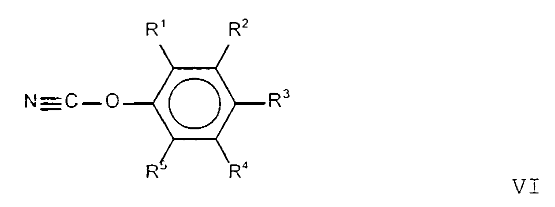

Den Mischungen können außerdem mono- oder polyfunktionelle Glycidether in Mengen bis zu 75 mol%, vorzugsweise bis 50 mol% Glycidylgruppen, bezogen auf die Summe der Glycidyl- und Cyanatgruppen, zugesetzt werden.

Einsetzbare Glycidether können die folgende Grundstruktur haben: 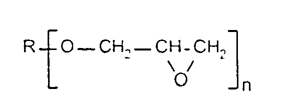 wobei R ein beliebiger aromatischer, aliphatischer oder cycloaliphatischer Rest ist und n=1 bis 20 ist. Beispiele sind Phenylglycidylether, 2,2-Bis(4-glycidyloxy-phenyl)propan, Bis(glycidyloxy)tetramethyldisiloxan oder Novolakcyanate der Struktur III, wobei OCN durch eine Glycidylether-Gruppe -OCH₂(CHCH₂O) ersetzt wurde. Die Glycidether können in reiner Form oder als Prepolymere eingesetzt werden.

Für lösungsmittelfreie Harzsysteme können flüssige Cyanate, z.B. AroCy® L-10 (Lonza AG), oder flüssige Mischungen aus AroCy® L-10 mit anderen Cyanaten oder deren Prepolymeren, oder flüssige Mischungen aus Cyanaten mit Glycidethern, z.B. Rütapox (Bakelite AG), verwendet werden. Im übrigen können z.B. Lösungsmittel verwendet werden, die die Cyanate bzw. Cyanat-Epoxy-Kombinationen lösen, aber nicht das reaktivitätsblockierte oder -geminderte Amin. Hierfür kommen z.B. Aceton, Dichlormethan, Tetrahydrofuran, Diethylenglycoldimethyl- oder diethylether, Diethylenglycolmonobutyletheracetat in Frage.

Unter den erfindungsgemäß einsetzbaren reaktivitätsblockierten oder -geminderten, insbesondere chemisch oder physikalisch verkapselten primären oder sekundären Aminen sind solche Amine zu verstehen, die aufgrund einer chemischen oder physikalischen Blockierung nicht in der Lage sind, mit in derselben Mischung vorhandenem Cyanat zu reagieren oder dies nur in geringem Ausmaß tun, aber ohne Umsetzung mit einem chemischen Partner zum Abspalten einer Schutzgruppe ihre Reaktivität wiedererlangen können. Diese Eigenschaft können die Amine aufgrund physikalischer oder chemischer Gegebenheiten besitzen. Besonders gut geeignet sind primäre oder sekundäre Amine, deren Reaktivitäts-Wiederherstellung zum gewünschten Zeitpunkt ausschließlich durch Temperaturerhöhung erfolgt. Hierfür ist es besonders bevorzugt, bei den Lagerbedingungen der Komponenten(mischung) feste, ungelöste bzw. unlösliche Amine in Teilchenform einzusetzen. Bei einer Erwärmung schmilzt das Amin, wodurch die Reaktivität sofort wiederhergestellt wird, entweder durch Reaktionen an den Korngrenzen oder in Lösung. In einer weiteren Ausgestaltung werden fein suspendierte Teilchen des Amins oder Amingemischs verkapselt, d.h. mit einer Schutzschicht umhüllt, so daß keine freien Aminogruppen für die funktionellen Gruppen des Harzes zugänglich sind und somit keine Härtungsreaktion vor dem Aufbrechen der Hülle stattfindet. Diese schmilzt oder bricht erst bei Temperaturerhöhung und gibt dabei das umhüllte Amin frei. Diese Schutzschicht kann feste, ggf. aber auch halbfeste oder flüssige Amine schützen, z.B. in Form von Coatings (z.B. aus Wachs) oder Vesikeln, deren Membran bei höheren Temperaturen nicht stabil ist.

In einer weiteren Ausgestaltung der Erfindung erfolgt eine chemische Modifizierung der Amine. Besonders bevorzugt wird dabei nur die Außenseite von festen Aminpartikeln behandelt. Dabei werden die mit der äußeren Umgebung in Kontakt stehenden Amingruppen mit einer Schutzgruppe versehen. Diese chemische Modifizierung kann, muß aber nicht ohne chemischen Reaktionspartner rückgängig gemacht werden. Dies gilt insbesondere im bevorzugten Fall, da hierdurch nur ein kleiner Teil, je nach Größe der Partikel z.B. etwa 10 % des Amins, inaktiviert wird. Diese Menge kann dann ggf. durch entsprechend höheren Zusatz von Amin kompensiert werden. Eine solche Modifizierung kann insbesondere erreicht werden, indem ein festes Amin oder Amingemisch in einem z.B. unpolaren Lösungsmittel suspendiert wird und die an der Oberfläche der Teilchen vorhandenen Aminogruppen z.B. mit Isocyanaten und/oder Chlorsilanen zur Reaktion gebracht werden. Die so verkapselten Amine sind bei niedrigen Temperaturen nicht im Harz löslich und es finden keine Reaktionen statt. Bei Temperaturerhöhung bis zum Schmelzbereich des Amins bzw. der Kapselschicht zerfällt die Kapsel, innenliegendes Amin steht zur Verfügung, und die Härtungsreaktion des Harzes setzt ein. Die Starttemperatur kann durch den Schmelzbereich und die Härtungszeit durch die Reaktivität des Amins eingestellt werden.

Die Größe der Amin-Teilchen ist in geeigneter Weise frei wählbar. Bevorzugt weisen die Teilchen einen Durchmesser von etwa 1 bis 100 µm, stärker bevorzugt von <20 µm auf.

Anstelle der genannten Wärmezufuhr kann die Reaktivität der Amine auch durch andere Maßnahmen wie Druckveränderung, Ultraschall, Bestrahlung oder dgl. wiederhergestellt werden. Die hierbei eingetragene Energiemenge (.so z.B. durch starke mechanische Schwingungen, z.B. durch Ultraschall, oder starke Scherkräfte, z.B. in einem Mischaggregat) kann z.B. zum Aufbrechen der Kapsel führen. Nach Freisetzung können sich die Amine dann z.B. im Harz lösen ohne zu schmelzen und die Reaktion starten. Energiereiche Strahlung oder dergleichen kann ggf. auch eingesetzt werden, um eine chemische Bindung unter Freisetzung einer Amingruppe zu öffnen.

Die Auswahl der Amine selbst ist nicht kritisch. Bei Einsatz fester Aminpartikel, die zum Schmelzen gebracht werden sollen, erfolgt sie beispielsweise nach dem Schmelzpunkt des Amins, der mit der Temperatur, bei der man das Harz härten will, korrespondieren sollte. Die Wahl der Anzahl der Aminogruppen pro Molekül wird je nach den gewünschten Eigenschaften des herzustellenden Duromers getroffen, was dem Fachmann geläufig ist. In ähnlicher Weise erfolgt die Auswahl von primären und/oder sekundären Aminen wie auch sonstiger Eigenschaften. So werden z.B. Alkylamine, die prinzipiell brauchbar sind, teilweise wegen zu hoher Reaktivität und/oder niedrigem Schmelzpunkt (sie sind häufig "wachsartig", was eine Verkapselung erschwert) nicht in Betracht gezogen werden. Als Beispiele für gut geeignete Amine seien 1,2-Diaminobenzen, 1,3-Diaminobenzen, 4,4'-Diaminodiphenylsulfon, 4,4'-Diaminodiphenylmethan, Piperazin, 1,4-Diaminocyclohexan, α,α'-Diamino-p-Xylen oder mit diesen Verbindungen strukturähnliche Amine genannt.

Das Mengenverhältnis von Cyanat und Amin liegt im Bereich von 95:5 bis 50:50, bezogen auf die Anzahl der vorhandenen Cyanat- und Amingruppen, eingestellt.

Die erfindungsgemäß einsetzbaren polyfunktionellen Cyanate, deren Prepolymere oder Mischungen und die erfindungsgemäß einsetzbaren Amine können bis zur vorgesehenen DuromerHerstellung ggf. getrennt aufbewahrt werden. Aufgrund der besonderen Eigenschaften der verwendeten Amine ist es aber insbesondere möglich, lagerstabile Mischungen bereitzustellen, die bereits die notwendige Menge an Amin enthalten. Unter "lagerstabil" soll dabei eine Mischung verstanden werden, die zumindest ein bis zwei Tage, ggf. aber auch mehrere Wochen oder Monate gelagert werden kann, ohne daß eine das Ergebnis der späteren Duromerherstellung wesentlich beeinflussende Polymerisation stattfinden würde.

Es können sowohl Ein- als auch Zweikomponentensysteme mit Verarbeitungszeiten (sog. "Topfzeiten" bei Raumtemperatur) von einigen Tagen bis mehreren Monaten formuliert werden. Wenn die Duromerherstellung erfolgen soll, wird die erforderliche Wärme oder Energie in die Mischung der Bestandteile eingetragen, worauf eine spontane Härtung erfolgt, die je nach der Reaktivität der gewählten Komponenten zwischen etwa 1 s und einigen Stunden abgeschlossen ist.

Die erhaltenen Duromere weisen eines oder mehrere der folgenden Strukturelemente auf: 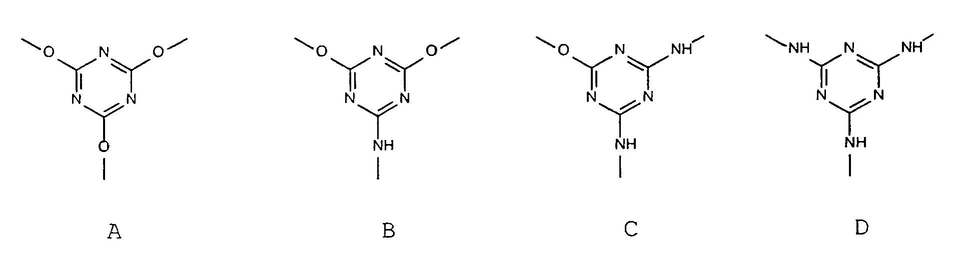 wobei mit zunehmendem Aminanteil vor allem die Strukturen C und D gebildet werden. Ab ca. 20 mol-% Amingruppen findet man kaum noch die Cyanuratstruktur A.

Zur Formulierung von Klebstoffen, Underfillern, Lacken usw. können dem so zusammengesetzten Harz die für die entsprechende Anwendung üblichen Zusatzstoffe, z.B. Thixotropierungsmittel, Füllstoffe, Farbstoffe, Leitpulver, Zähmodifikatoren (Toughener) u.a. zugesetzt werden bzw. sein.

Die Erfindung soll durch die nachfolgenden Beispiele näher erläutert werden.

### Beispiel 1

39.6 g Bis-(4-aminophenyl)methan werden in einer Mühle fein gemahlen (Teilchengröße <20µm) und das erhaltene Pulver in 500 ml Cyclohexan unter kräftigem Rühren bei 60°C supendiert. 17 ml 1,6-Diisocyanatohexan werden in 40 ml Cyclohexan gelöst und diese Lösung der Aminsuspension zugetropft. Nach 30 min wird die Suspension filtriert, das Filtrat mit Cyclohexan gewaschen und getrocknet. Es werden 40 g eines weißen Pulvers erhalten. Zu 9 g AroCy® L-10 (Lonza AG), Verbindung II mit R¹-R⁸=H, Z=Phenylmethyl, werden 1 g des verkapselten Amins gegeben und gut verrührt. Es entsteht eine stabile opaque Suspension. Nach einer Woche bei Raumtemperatur hat sich die Viskosität des Harzes nur um 10% erhöht. Die Gelierzeiten der Mischung betragen 1 s bei 150 °C und 10 s bei 100 °C. Nach 2 min bei 150 °C ist das Harz ausgehärtet. Das entstandende Duromer hat eine Glastemperatur von 218 °C.

### Beispiel 2

26 g 1,4-Diaminobenzen werden in einer Mühle fein gemahlen (Teilchengröße <20µm) und das erhaltene Pulver in 320 ml Cyclohexan unter kräftigem Rühren bei 70 °C supendiert. 11.6 ml 1,6-Diisocyanatohexan werden in 65 ml Cyclohexan gelöst und diese Lösung der Aminsuspension zugetropft. Nach 10 min wird die Suspension filtriert, das Filtrat mit Cyclohexan gewaschen und getrocknet. Es werden 31.3 g eines hellvioletten Pulvers erhalten. Zu einer Mischung aus 6.3 g AroCy® L-10 (Lonza AG), Verbindung II mit R¹-R⁸=H, Z=Phenylmethyl, und 2.7 g Rütapox 0164 (Bakelite AG) werden 1 g des verkapselten Amins gegeben und gut verrührt. Es entsteht eine stabile opaque Suspension. Nach drei Wochen bei Raumtemperatur hat sich die Viskosität des Harzes nur um 6% erhöht. Die Gelierzeiten der Mischung betragen 30 s bei 150 °C und 100 s bei 120 °C. Nach 4 min bei 150 °C ist das Harz ausgehärtet. Das entstandende Duromer hat eine Glastemperatur von 187 °C.

### Beispiel 3

26 g 1,4-Diaminobenzen werden in einer Mühle fein gemahlen (Teilchengröße <20µm) und das erhaltene Pulver in 320 ml Cyclohexan unter kräftigem Rühren bei 70 °C supendiert. 11.6 ml 1,6-Diisocyanatohexan werden in 65 ml Cyclohexan gelöst und diese Lösung der Aminsuspension zugetropft. Nach 10 min wird die Suspension filtriert, das Filtrat mit Cyclohexan gewaschen und getrocknet. Es werden 31.3 g eines hellvioletten Pulvers erhalten. Zu einer Mischung aus 6 g Prepolymer aus AroCy® B-10 (Lonza AG), Verbindung II mit R¹-R⁸=H, Z=Isopropyl, Umsatzgrad 32% der Cyanatgruppen, und 3 g Butandioldiglycidether werden 1.5 g des verkapselten Amins gegeben und gut verrührt. Es entsteht eine stabile opaque Suspension. Nach drei Wochen bei Raumtemperatur hat sich die Viskosität des Harzes nur um 4% erhöht. Die Gelierzeiten der Mischung betragen 15 s bei 150 °C und 50 s bei 120 °C. Nach 3 min bei 150 °C ist das Harz ausgehärtet. Das entstandende Duromer hat eine Glastemperatur von 164 °C.

### Beispiel 4

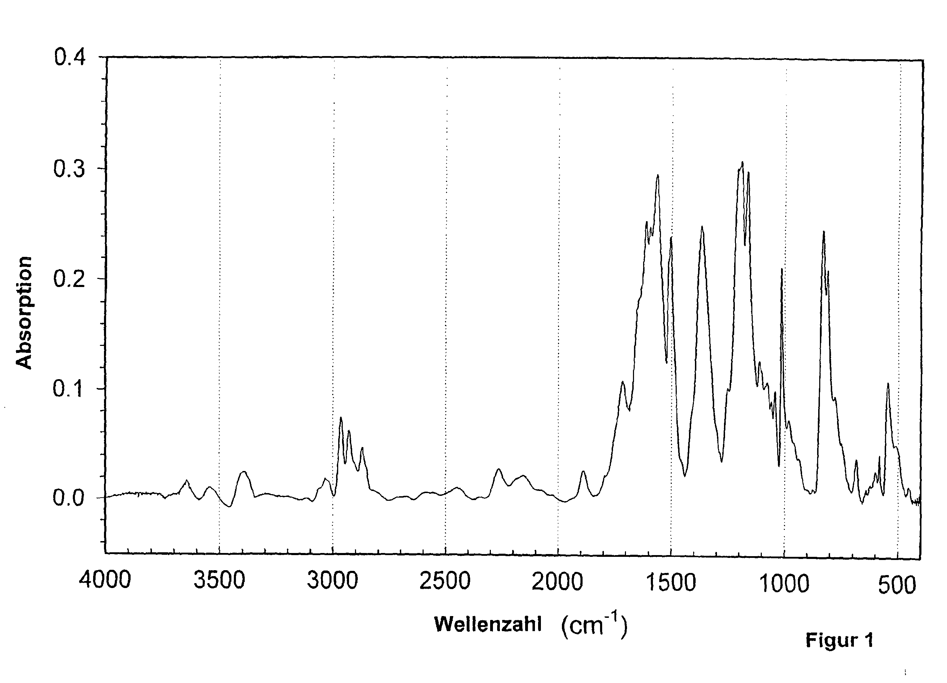

24 g 1,4-Diaminobenzen werden in einer Mühle fein gemahlen (Teilchengröße <20µm) und das erhaltene Pulver in 470 ml Cyclohexan unter kräftigem Rühren bei 70 °C supendiert. 13.9 ml Isophorondiisocyanat werden in 70 ml Cyclohexan gelöst und diese Lösung der Aminsuspension zugetropft. Nach 10 min wird die Suspension filtriert und das Filtrat mit Cyclohexan gewaschen. Das erhaltene Pulver wird in 250 ml Toluen und 20.5 ml Triethylamin unter kräftigem Rühren bei 25 °C supendiert. 18.9 ml Trimethylchlorsilan werden in 30 ml Toluen gelöst und diese Lösung der Suspension zugetropft. Nach 60 min wird die Suspension filtriert und das Filtrat mit Toluen gewaschen und getrocknet. Es werden 25.2 g eines hellvioletten Pulvers erhalten. Zu einer Mischung aus 6.3 g AroCy® PT-15 (Lonza AG), Verbindung III mit R⁹ =H, und 2.7 g Butandioldiglycidether werden 1.2 g des verkapselten Amins gegeben und gut verrührt. Es entsteht eine stabile opaque Suspension. Nach zwei Monaten bei Raumtemperatur hat sich die Viskosität des Harzes nur um 5% erhöht. Die Gelierzeiten der Mischung betragen 10 s bei 150 °C und 25 s bei 120 °C. Nach 3 min bei 150 °C ist das Harz ausgehärtet. Das entstandende Duromer hat eine Glastemperatur von 201 °C. Die beigefügte **Fig. 1** zeigt das IR-Spektrum eines auf die gleiche Weise hergestellten Duromers, mit der Ausnahme, daß die Härtungszeit bei 150 °C 5 Minuten betrug.

### Beispiel 5

17.1 g 1,4-Diaminocyclohexan werden in einer Mühle fein gemahlen (Teilchengröße <20µm) und das erhaltene Pulver in 400 ml Cyclohexan unter kräftigem Rühren bei 25 °C supendiert. 6.3 ml Isophorondiisocyanat werden in 50 ml Cyclohexan gelöst und diese Losung der Aminsuspension zugetropft. Nach 15 min wird die Suspension filtriert und das Filtrat mit Cyclohexan gewaschen. Das erhaltene Pulver wird in 200 ml Toluen und 13.7 ml Triethylamin unter kräftigem Rühren bei 25 °C supendiert. 12.6 g Trimethylchlorsilan werden in 30 ml Toluen gelöst und diese Lösung der Suspension zugetropft. Nach 30 min wird die Suspension filtriert und das Filtrat mit Toluen gewaschen und getrocknet. Es werden 19.8 g eines hellgelben Pulvers erhalten. Zu einer Mischung aus 5 g AroCy® L-10 (Lonza AG), Verbindung II mit R¹-R⁸=H, Z=Phenylmethyl, und 4 g Trimethylolpropantriglycidether werden 1.1 g des verkapselten Amins gegeben und gut verrührt. Es entsteht eine stabile opaque Suspension. Nach zwei Monaten bei Raumtemperatur hat sich die Viskosität des Harzes nur um 5% erhöht. Die Gelierzeiten der Mischung betragen 1 s bei 150 °C und 20 s bei 80 °C. Nach 60 s bei 150 °C bzw. 5 min bei 80°C ist das Harz ausgehärtet. Das entstandende Duromer hat eine Glastemperatur von 170 °C.

### Vergleichsbeispiel 1

Beispiel 4 wurde wiederholt, wobei jedoch das unverkapselte 1,4-Diaminobenzen mit dem Harz gemischt wurde.

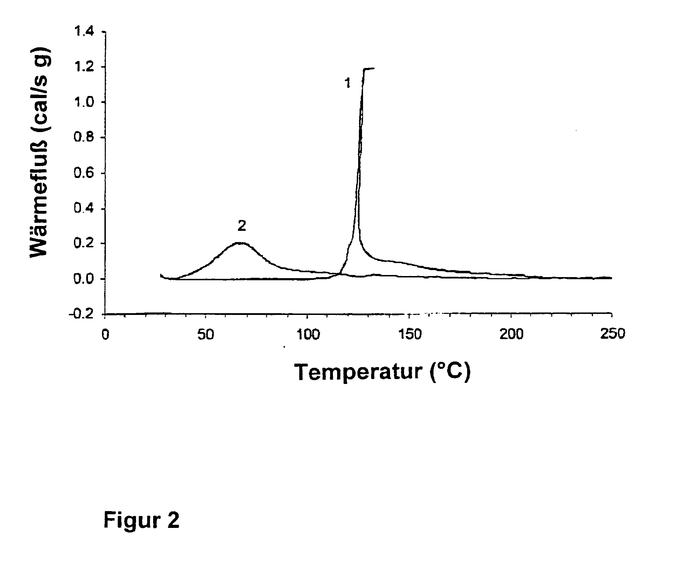

Figur 2 zeigt die Differentialthermogramme der Härtungen einer Mischung nach Beispiel 4 (Kurve 1) und einer Mischung nach Vergleichsbeispiel 1 (Kurve 2). Die Mischung nach Beispiel 4 zeigt bis zu einer Temperatur von ca. 100°C keine meßbare Härtungsreaktion. Bei ca. 120°C setzt die Reaktion nahezu schlagartig ein und ist bei der gewählten Heizrate von 5K/min bis zur Temperatur von ca. 170°C beendet. Demgegenüber hat die Härtung der Mischung nach Vergleichsbeispiel 1 bereits beim Start der Messung bei 27°C begonnen und ist bis zu einer Temperatur von ca. 120°C nahezu vollständig beendet.

## Patentansprüche

1. Schnell härtendes System zur Herstellung von triazingruppenhaltigen, aminmodifizierten Duromeren mit
a) mindestens einem polyfunktionellen organischen monomeren oder prepolymerisierten Cyanat und
b) mindestens einem primären oder sekundären Amin,
wobei die Menge an Amin so gewählt ist, daß das Molverhältnis von Cyanat- zu Amingruppen 95:5 bis 50:50 beträgt, und
c) ggf. weiteren Zusatzstoffen,
**dadurch gekennzeichnet, daß** das Amin in einer reaktivitätsblockierten oder -geminderten Form vorliegt, die ohne Umsetzung mit einem chemischen Reaktionspartner reaktiviert werden kann.

2. Schnell härtendes System nach Anspruch 1, wobei das polyfuntionelle organische Cyanat unter Cyanaten der Formeln I bis IV: 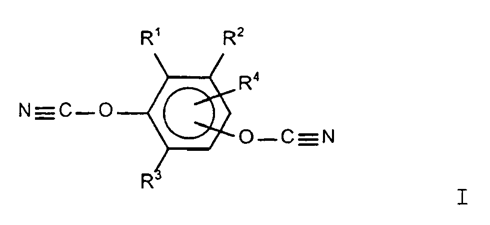 worin R¹ bis R⁴ unabhängig voneinander Wasserstoff, C₁-C₁₀₋Alkyl, C₃-C₈-Cycloalkyl, C₁-C₁₀-Alkoxy, Halogen, Phenyl oder Phenoxy ist, wobei die Alkyl- oder Arylgruppen fluoriert oder teilfluoriert sein können, 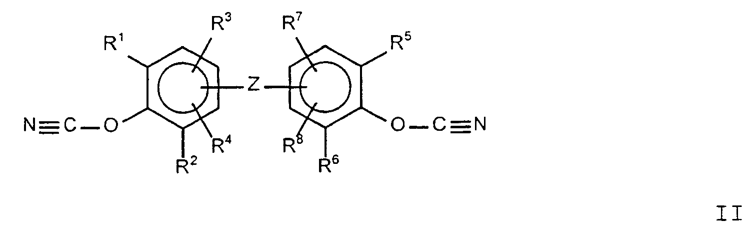 worin R⁵ bis R⁸ wie R¹ bis R⁴ sind und Z eine chemische Bindung, SO₂, CF₂, CH₂, CHF, CH(CH₃), Isopropyl, Hexafluoroisopropyl, C₁-C₁₀-Alkyl, O, NR⁹, N=N, CH=CH, COO, CH=N, CH=N-N=CH, Alkyloxyalkyl mit C₁-C₈-Alkyl, S, Si(CH₃)₂, 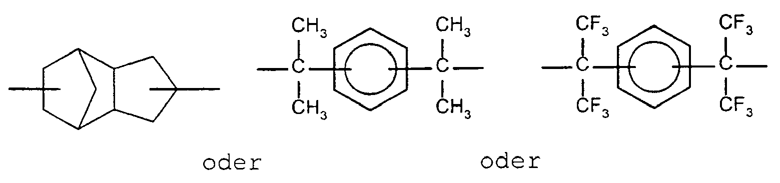 ist, 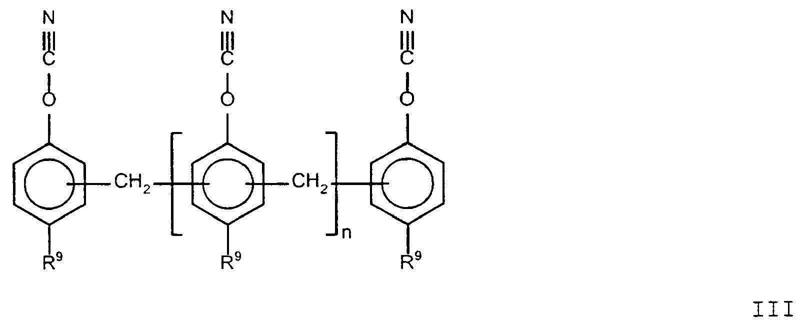 worin R⁹ Wasserstoff oder C₁-C₁₀-Alkyl ist und n einen Wert von 0 bis 20 darstellt,
N≡C―O―R¹⁰-O―C≡N IV
wobei R¹⁰ ein zweibindiger organischer nichtaromatischer Kohlenwasserstoff mit mindestens einem Fluor-Atom und mit insbesondere 3 bis 12 Kohlenstoffatomen ist,
sowie unter Prepolymeren der vorgenannten Cyanate ausgewählt ist.

3. Schnell härtendes System nach Anspruch 1 oder 2, worin die Cyanate der Struktur I ausgewählt sind unter Phenylen-1,3-dicyanat, Phenylen-1,4-dicyanat und 2,4,5-Trifluorophenylen-1,3-dicyanat und/oder die Cyanate der Struktur II ausgewählt sind unter 2,2-Bis(4-cyanato-phenyl)propan, 2,2-Bis(4-cyanato-phenyl)hexafluoropropan und Biphenylen-4,4'-dicyanat.

4. Schnell härtendes System nach einem der Ansprüche 1 bis 3, worin das System mindestens ein zusätzliches monofunktionelles Cyanat der Struktur V und/oder VI
N≡C-O-R¹⁰ V 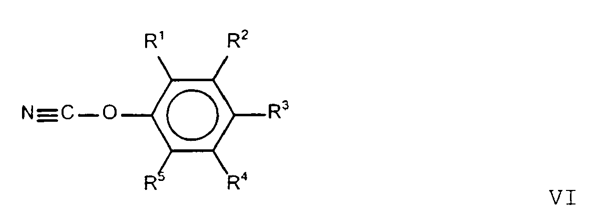
und/oder Prepolymere aus oder mit mindestens einem Cyanat der Formeln V oder VI enthält.

5. Schnell härtendes System nach einem der voranstehenden Ansprüche, worin das System zusätzlich mindestens einen mono- oder polyfunktionellen Glycidether in Mengen bis zu 75 mol%, vorzugsweise bis 50 mol% Glycidylgruppen, bezogen auf die Summe der Glycidyl- und Cyanatgruppen, enthält.

6. Schnell härtendes System nach Anspruch 5, **dadurch gekennzeichnet, daß** die mono- oder polyfunktionellen Glycidether ausgewählt sind unter solchen der nachstehenden Formel: 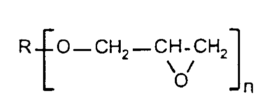 wobei R ein beliebiger aromatischer, aliphatischer oder cycloaliphatischer Rest ist und n=1 bis 20 ist.

7. Schnell härtendes System nach Anspruch 5 oder 6, worin die Glycidether ausgewählt sind unter Phenylglycidylether, 2,2-Bis(4-glycidyloxy-phenyl)propan, Bis(glycidyloxy)-tetramethyldisiloxan und Novolakcyanaten der Struktur III, worin OCN durch eine Glycidylether-Gruppe -OCH₂(CHCH₂O) ersetzt wurde.

8. Schnell härtendes System nach einem der voranstehenden Ansprüche, **dadurch gekennzeichnet, daß** das Amin in Form von festen, in der Umgebung nicht löslichen Teilchen mit einem Durchmesser zwischen 1 und 100 µm, vorzugsweise von durchschnittlich <20 µm, vorliegt.

9. Schnell härtendes System nach Anspruch 5, **dadurch gekennzeichnet, daß** die Amin-Teilchen an ihrer Außenseite chemisch inert sind.

10. Schnell härtendes System nach Anspruch 9, **dadurch gekennzeichnet, daß** die Amin-Teilchen an ihrer Außenseite mit Isocyanaten und/oder Chlorsilanen zur Reaktion gebracht wurden.

11. Verfahren zum Herstellen von triazingruppenhaltigen, aminmodifizierten Duromeren, wobei mindestens ein polyfunktionelles organisches monomeres oder prepolymerisiertes Cyanat wie in einem der Ansprüche 1 bis 3 definiert und mindestens ein primäres oder sekundäres Amin und ggf. weitere Zusatzstoffe vermischt und zur Reaktion gebracht werden und die Menge an Amin so gewählt ist, daß das Molverhältnis von Cyanat- zu Amingruppen 95:5 bis 50:50 beträgt,
**dadurch gekennzeichnet, daß** das Cyanat mit dem Amin in einer reaktivitätsblockierten oder -geminderten Form vermischt wird, die ohne Umsetzung mit einem chemischen Reaktionspartner reaktiviert werden kann, worauf das Amin reaktiviert wird.

12. Verfahren nach Anspruch 11, worin dem Cyanat weiterhin mindestens ein monofunktionelles Cyanat und/oder ein monofunktioneller Glycidether zugemischt werden.

## Claims

1. Fast curable system for the preparation of amine modified thermosetting materials containing triazine radicals, comprising:
a) at least one polyfunctional organic monomeric or prepolymerized cyanate and
b) at least one primary or secondary amine,
wherein the amount of amine is selected such that the molar ratio of cyanate to amine radicals is 95:5 to 50:50, and
c) optionally additional additives,
**characterized in that** the amine present has a blocked or decreased reactivity, which can be reactivated without reacting it with a chemical participant of reaction.

2. Fast curable system according to claim 1, wherein the polyfunctional organic cyanate is selected among cyanates having formulae I to IV: 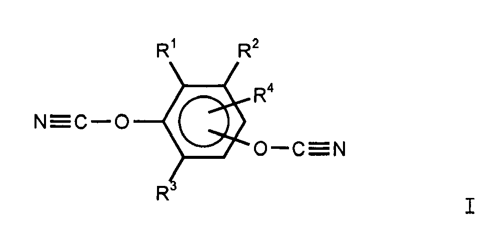 wherein R¹ to R⁴ are independently from each other hydrogen, C₁-C₁₀ alkyl, C₃-C₈ cycloalkyl, C₁-C₁₀ alkoxy, halogen, phenyl or phenoxy, the alkyl or aryl radicals optionally being fluorinated or partly fluorinated, 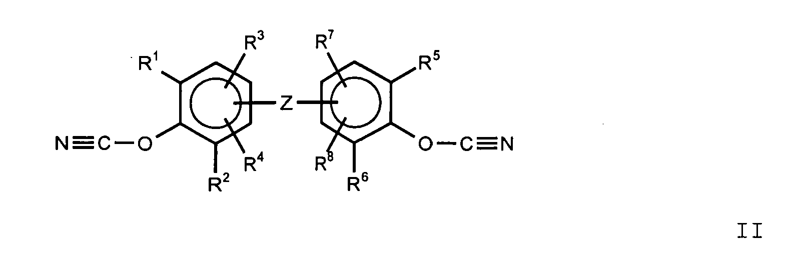 wherein R⁵ to R⁸ are as R¹ to R⁴, and Z is a chemical bond, SO₂, CF₂, CH₂, CHF, CH(CH₃), isopropyl, hexafluoroisopropyl, C₁-C₁₀ alkyl, O, NR⁹, N=N, CH=CH, COO, CH=N, CH=N-N=CH, alkyl oxyalkyl containing C₁-C₈-Alkyl, S, Si(CH₃)₂, 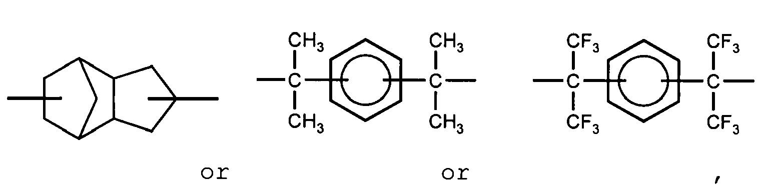 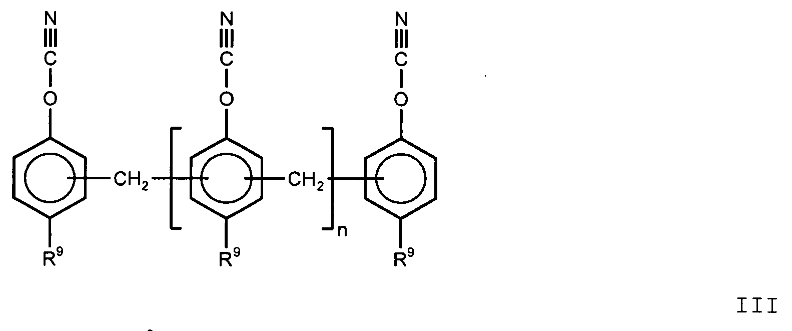 wherein R⁹ is hydrogen or C₁-C₁₀ alkyl and n is an integer of from 0 to 20,
N≡C-O-R¹⁰-O-C≡N IV
wherein R¹⁰ is a two-binding organic non-aromatic hydrocarbon having at least one fluorine atom and preferably 3 to 12 carbon atoms,
as well as among prepolymers of the said cyanates.

3. Fast curable system according to claim 1 or 2, wherein the cyanates having structure I are selected among phenylene-1,3-dicyanate, phenylene-1,4-dicyanate and 2,4,5-trifluorophenylene-1,3-dicyanate, and/or wherein the cyanates of structure II are selected from 2,2-bis(4-cyanato-phenyl)propane, 2,2-bis(4-cyanatophenyl)hexafluoropropane and biphenylene-4,4'-dicyanate.

4. Fast curable system according to any of claims 1 to 3, wherein the system additionally contains at least one monofunctional cyanate of structure V and/or VI
N≡C-O-R¹⁰ V 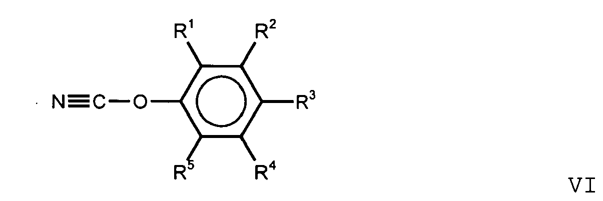
and/or prepolymers of or containing at least one cyanate of formulae V or VI.

5. Fast curable system according to any of the preceding claims, wherein the system additionally contains at least one mono- or polyfunctional glycidyl ether in an amount of up to 7.5 mol-%, preferably up to 50 mol-%, glycidyl radicals, in relation to the sum of glycidyl radicals and cyanate radicals.

6. Fast curable system according to claim 5, **characterized in that** the mono- or polyfunctional glycidyl ethers are selected among those of the following formula: 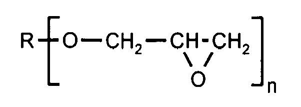 wherein R is any aromatic, aliphatic or cycloaliphatic radical, and n is an integer of 1 to 20.

7. Fast curable system according to claim 5 or 6, wherein the glycidyl ethers are selected from phenyl glycidyl ether, 2,2-bis(4-glycidyloxy-phenyl)propane, bis(glycidyloxy)-tetramethyldisiloxane and novolak cyanates of structure III wherein OCN has been replaced by a glycidylether residue -OCH₂(CHCH₂O).

8. Fast curable system according to any of the preceding claims, **characterized in that** the amine is in the shape of solid particles which are insoluble in their environment and have a diameter of between 1 and 100 µm, preferably of <20 µm in average.

9. Fast curable system according to claim 5, **characterized in that** the amine particles are chemically inert at their outer surface.

10. Fast curable system according to claim 9, **characterized in that** the outer surface of the amine particles has been reacted with isocyanates and/or chlorosilanes.

11. Method for preparing amine modified thermosetting materials containing triazine groups, wherein at least one polyfunctional organic monomeric or prepolymerized cyanate as defined in any of claims 1 to 3 and at least one primary or secondary amine and optionally additional additives are mixed and reacted, and the amount of amine is selected such that the molar ratio of cyanate radicals to amine radicals is from 95:5 to 50:50,
**characterized in that** the cyanate is mixed with the amine while the amine has a blocked or decreased reactivity which can be reactivated without reacting it with a chemical participant of reaction, and subsequently the amine is reactivated.

12. Method according to claim 11, wherein at least one monofunctional cyanate and/or one glycidyl ether is additionally mixed with the cyanate.

## Revendications

1. Système à durcissement rapide pour la fabrication de duromères contenant des groupements triazine et modifiés par une amine avec :
a) au moins un monomère organique polyfonctionnel ou un cyanate prépolymérisé et
b) au moins une amine primaire ou secondaire, la quantité d'amine étant choisie de sorte que le rapport molaire des groupements cyanate aux groupements amine soit de 95:5 à 50:50, et
c) éventuellement d'autres additifs,
**caractérisé en ce que** l'amine est présente sous une forme à réactivité bloquée ou atténuée, qui peut être réactivée sans réaction avec un partenaire réactionnel chimique.

2. Système à durcissement rapide selon la revendication 1, dans lequel on choisit le cyanate organique polyfonctionnel parmi les cyanates de formules I à IV suivantes : 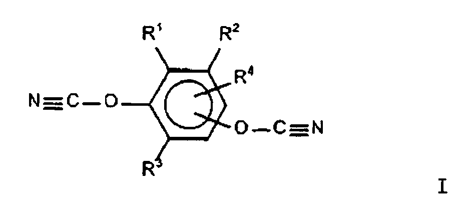 où R¹ à R⁴ représentent, indépendamment les uns des autres, l'hydrogène, un groupement alkyle en C₁-C₁₀, cycloalkyle en C₃-C₈, alcoxy en C₁-C₁₀, halogéno, phényle ou phénoxy, parmi lesquels les groupements alkyle ou aryle peuvent être fluorés ou partiellement fluorés, 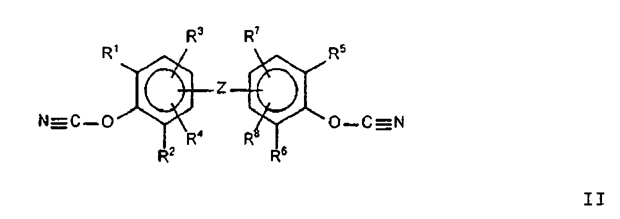 où R⁵ à R⁸ sont identiques aux radicaux R¹ à R⁴ et Z est une liaison chimique, SO₂, CF₂, CH₂, CHF, CH(CH₃), un groupement isopropyle, hexafluoroisopropyle, alkyle en C₁-C₁₀, O, NR⁹, N=N, CH=CH, COO, CH=N, CH=N-N=CH, alkyloxyalkyle ayant un groupement alkyle en C₁-C₈, S, Si(CH₃)₂, 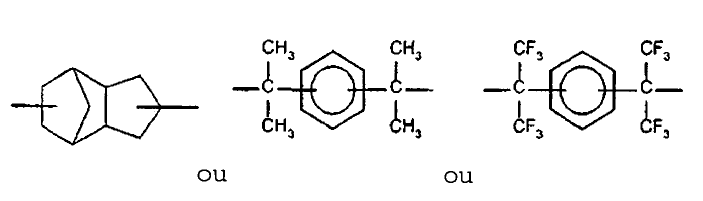 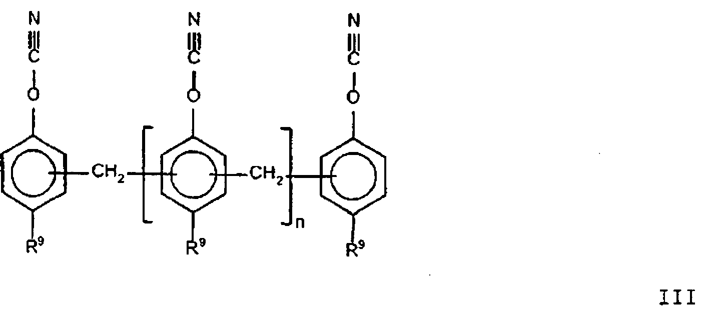 où R⁹ est l'hydrogène ou un groupement alkyle en C₁-C₁₀ et n représente une valeur de 0 à 20,
N≡C―O―R¹⁰-O―C≡N IV
où R¹⁰ est un hydrocarbure organique non aromatique bivalent ayant au moins un atome de fluor et, en particulier, 3 à 12 atomes de carbone, ainsi que parmi les prépolymères des cyanates précités.

3. Système à durcissement rapide selon la revendication 1 ou 2, dans lequel on choisit les cyanates de structure I parmi les composés phénylène-1,3-dicyanate, phénylène-1,4-dicyanate et 2,4,5-trifluorophénylène-1,3-dicyanate et/ou les cyanates de structure II parmi les composés 2,2-bis(4-cyanato-phényl)propane, 2,2-bis(4-cyanato-phényl)hexafluoropropane et biphénylène-4,4'-dicyanate.

4. Système à durcissement rapide selon l'une quelconque des revendications 1 à 3, dans lequel le système contient au moins un cyanate monofonctionnel supplémentaire de structure V et/ou VI :
N≡C-O-R¹⁰ V 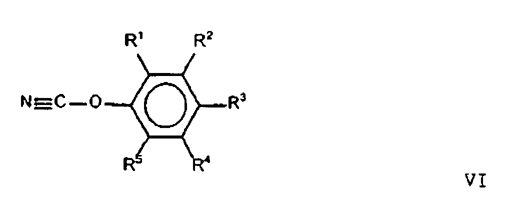
et/ou des prépolymères formés ou au moins constitué d'un cyanate de formule V ou VI.

5. Système à durcissement rapide selon l'une quelconque des revendications précédentes, dans lequel le système contient encore au moins un éther glycidique monofonctionnel ou polyfonctionnel en quantités jusqu'à 75% en mole, de préférence, jusqu'à 50% en mole de groupements glycidyle par rapport à la somme des groupements glycidyle et cyanate.

6. Système à durcissement rapide selon la revendication 5, **caractérisé en ce que** l'on choisit les éthers glycidiques monofonctionnels ou polyfonctionnels parmi ceux de formule suivante : 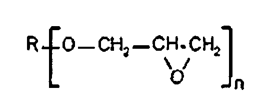 dans laquelle R est n'importe quel radical aromatique, aliphatique ou cycloaliphatique et où n = 1 à 20.

7. Système à durcissement rapide selon la revendication 5 ou 6, dans lequel on choisit les éthers glycidiques parmi l'éther phénylglycidique, le 2,2-bis(4-glycidyloxy-phényl)propane, le bis(glycidyloxy)-tétraméthyldisiloxane et des cyanates novolaques de structure III, où OCN a été substitué par un groupement éther glycidique -OCH₂(CHCH₂O).

8. Système à durcissement rapide selon l'une quelconque des revendications précédentes, **caractérisé en ce que** l'amine est présente sous la forme de particules solides non solubles dans le milieu environnant, d'un diamètre compris entre 1 et 100 µm, de préférence, d'une valeur moyenne < 20 µm.

9. Système à durcissement rapide selon la revendication 5, **caractérisé en ce que** les particules d'amine sont chimiquement inertes sur leur face externe.

10. Système à durcissement rapide selon la revendication 9, **caractérisé en ce que** l'on fait réagir les particules d'amine sur leur face externe avec des isocyanates et/ou des chlorosilanes.

11. Procédé pour la fabrication de duromères contenant des groupements triazine et modifiés par une amine, dans lequel on mélange et on fait réagir au moins un cyanate organique polyfonctionnel monomère ou prépolymérisé, tel que défini dans l'une quelconque des revendications 1 à 3, et au moins une amine primaire ou secondaire et éventuellement d'autres additifs, et dans lequel on choisit la quantité d'amine de sorte que le rapport molaire des groupements cyanate aux groupements amine soit de 95:5 à 50:50, **caractérisé en ce que** le cyanate est mélangé à l'amine dans une forme de réactivité bloquée ou atténuée qui peut être réactivée sans réaction avec un partenaire réactionnel chimique, après quoi l'amine est réactivée.

12. Procédé selon la revendication 11, dans lequel on ajoute en outre au cyanate au moins un cyanate monofonctionnel et/ou un éther glycidique monofonctionnel.
